# FASCICULE DE BREVET EUROPEEN

(11) **EP 1 890 961 B1**
(45) Date de publication et mention de la délivrance du brevet: **22.02.2017**
(21) Numéro de dépôt: 06794450.4
(22) Date de dépôt: 22.05.2006
(51) Int. Cl.: C01B 3/50, C01B 3/52, C01B 3/56, C01B 32/40, B01D 53/04, B01D 53/047, B01D 53/26, F25J 3/02

(54) **PROCEDE POUR LA PRODUCTION SIMULTANEE D'HYDROGENE ET DE MONOXYDE DE CARBONE**
VERFAHREN ZUR SIMULTANEN ERZEUGUNG VON WASSERSTOFF UND KOHLENMONOXYD
METHOD FOR SIMULTANEOUSLY PRODUCING HYDROGEN AND CARBON MONOXIDE

(30) Priorité: 06.06.2005 WO PCT/FR2005/050421
(43) Date de publication de la demande: 27.02.2008
(73) Titulaire: L'Air Liquide Société Anonyme pour l'Etude et l'Exploitation des Procédés Georges Claude, 75321 Paris Cedex 07 (FR)
(72) Inventeur: DARDE, Arthur, F-75012 Paris (FR); MARTY, Pascal, F-75002 Paris (FR); HERNANDEZ, Antoine, F-94420 Le Plessis Trevise (FR); TSEVERY, Jean-Marc, F-77127 Lieusant (FR)
(74) Mandataire: Conan, Philippe Claude
(86) Numéro de dépôt international: PCT/FR2006/050468
(87) Numéro de publication internationale: WO 2007/000545

(56) Documents cités:
- EP-A- 0 307 843
- WO-A-03/043718
- WO-A-03/086965
- US-A1- 2005 066 813

## Description

La présente invention est relative à un procédé pour la production simultanée d'hydrogène et de monoxyde de carbone et à une installation pour la mise en oeuvre de ce procédé.

Les procédés de production de monoxyde de carbone et d'hydrogène peuvent être séparés en deux parties :
- *génération du gaz de synthèse* (mélange contenant H₂, CO, CH₄, CO₂ et N₂ essentiellement). Parmi les diverses voies industrielles de production de gaz de synthèse, on peut citer le reformage à la vapeur d'eau, l'oxydation partielle, le reformage auto-thermique, etc., le reformage à la vapeur pouvant être considéré comme la voie la plus importante ; selon la composition du mélange à reformer, le reformage à la vapeur est fréquemment précédé par des étapes de pré-traitement, notamment par une étape d'hydrodésulfuration, ainsi que par une étape de pré-reformage. Dans la suite de la description, sauf indications contraires, l'expression « génération de gaz de synthèse » regroupera l'ensemble des étapes conduisant à la génération d'un gaz de synthèse, les expressions « alimenter l'unité de génération de gaz de synthèse » (en un fluide) ou « envoyer (un fluide) à l'alimentation de l'unité de génération de gaz de synthèse » signifieront que l'on fournit à ladite unité un fluide dont tout ou partie des constituants se retrouveront dans le gaz de synthèse ; parmi les fluides alimentant l'unité de génération on citera notamment la charge d'hydrocarbures, l'hydrogène pour alimenter l'étape de désulfuration, les fluides oxydants des étapes de pré-reformage et de reformage, dont la vapeur d'eau et le dioxyde de carbone.
- *purification du gaz de synthèse.* Les principales étapes en sont :
   - la décarbonatation primaire, destinée à éliminer la plus grande partie du CO₂ contenu dans le gaz de synthèse à l'issue de l'étape de génération, elle est en général obtenue par lavage du gaz de synthèse aux amines,
   - la dessiccation/décarbonatation secondaire, souvent appelée aussi épuration, durant laquelle le gaz est épuré de son eau et du dioxyde de carbone résiduel. Elle se fait par passage sur lit d'adsorbants. L'unité d'épuration comprend généralement deux bouteilles d'adsorption en fonctionnement alterné, l'une étant en phase d'adsorption tandis que l'autre est en phase de régénération ou désorption à contre-courant. Le gaz de régénération utilisé lors de cette phase de régénération doit être sec et exempt de dioxyde de carbone,
   - la séparation, consistant en général en un traitement à basse température par un procédé cryogénique (boîte froide) pour produire du monoxyde de carbone et de l'hydrogène (ainsi qu'éventuellement un mélange des deux) à des débits et puretés requis par le client. Lors de l'étape de séparation, des gaz résiduaires sont produits. Ils contiennent les éléments indésirables dans les produits fournis au client, mais aussi une quantité non nulle d'hydrogène et de monoxyde de carbone entraînés dans ces gaz résiduaires ; ceci nuit au rendement de l'unité de séparation.
      Le plus fréquemment, on procède pour la séparation à un lavage au méthane liquide qui permet d'obtenir du monoxyde de carbone pur avec un rendement de récupération pouvant atteindre 99 %, de l'hydrogène dont la teneur en monoxyde de carbone varie généralement entre quelques ppm et 1 % et un gaz résiduaire riche en méthane utilisé comme combustible.
      Une autre solution consiste à condenser partiellement le débit de gaz de synthèse pour produire du monoxyde de carbone et de l'hydrogène purs, ainsi qu'un gaz de flash et un résiduaire basse pression composé essentiellement de CO et CH₄, appelé aussi purge de méthane. Lorsque la teneur en azote dans la charge d'hydrocarbure est trop importante, il est nécessaire de rajouter une étape cryogénique de dé-azotation du CO produit.

Des procédés de ce type sont décrits dans US2005/0066813 et EP-A-0359629.

Réduire les coûts, tant opératoires que d'investissement des unités de production de monoxyde de carbone et/ou d'hydrogène est une préoccupation constante, de même que l'amélioration des rendements et qualités de production.

Ainsi, EP-A-0790212 décrit un procédé dans lequel une fraction enrichie en méthane résiduel est recyclée au fluide d'alimentation afin de réduire la consommation spécifique d'hydrocarbures par mole de CO produite.

Par ailleurs, la régénération de l'unité d'épuration utilise un gaz qui doit être sec et exempt de dioxyde de carbone.

Dans de nombreux cas, l'hydrogène produit par la boîte froide, (contenant jusqu'à 1 % molaire de CO), est utilisé comme gaz de régénération de l'épuration, puis est envoyé vers une unité de purification par adsorbants (PSA) avant d'être acheminé vers le client final.

Cependant, dans le cas où la boîte froide est conçue pour produire directement l'hydrogène répondant aux spécifications de pureté du client, il n'est plus possible d'utiliser ce gaz comme gaz de régénération, sauf à prélever une partie de la production et diminuer le rendement en hydrogène de l'installation.

Dans le cas également où l'on produit un mélange de monoxyde de carbone et d'hydrogène contenant généralement 50 % d'hydrogène, la quantité d'hydrogène restante comme gaz résiduaire est trop faible pour régénérer l'épuration, il est donc nécessaire de trouver un autre gaz comme gaz de régénération.

Une solution connue consiste alors à produire une quantité d'hydrogène supplémentaire qui sera ensuite utilisé comme gaz de régénération de l'épuration et enfin valorisé comme carburant.

EP-A-1503953 décrit quant à lui un procédé dans lequel on recycle un gaz riche en hydrogène dans le gaz de synthèse en amont de l'unité de décarbonatation, après l'avoir utilisé comme gaz de régénération dans l'unité d'épuration.

Par ailleurs, ainsi que mentionné ci-dessus, il peut être nécessaire, afin de répondre aux spécifications de pureté requises par le client, de débarrasser le monoxyde de carbone produit en sortie de boîte froide d'une partie des impuretés présentes. En effet, en sortie de boîte froide, le monoxyde de carbone contiendra aussi l'azote et l'argon présents dans le gaz de synthèse car ces composants, ayant des caractéristiques physico-chimiques très proches de celles du CO, ne peuvent être séparés de celui-ci par les moyens de séparation utilisés pour les autres composants du gaz de synthèse. Ces impuretés gazeuses se comportent en général comme des inertes, mais leur présence, voire leur accumulation est dans le meilleur des cas, gênante, car elle oblige à sur-dimensionner les appareils, augmente les consommations d'énergie, etc.

Il est ainsi souvent nécessaire de réduire la teneur en azote dans le monoxyde de carbone produit en sortie de boîte froide, en particulier lorsque le monoxyde de carbone est utilisé comme produit de départ pour certaines synthèses dont la synthèse d'acide acétique, mais aussi lorsque l'hydrocarbure de départ est riche en azote. De la même manière, il pourra être nécessaire de réduire la teneur en argon, provenant notamment de l'oxygène dans le cas d'une oxydation partielle ou d'un reformage auto-thermique.

Une solution connue pour éliminer l'azote consiste alors à équiper l'unité de séparation (boîte froide) d'une colonne de dé-azotation (ou permettant de retirer l'argon) destinée à éliminer une partie de l'azote (ou de l'argon) contenue dans le monoxyde de carbone produit par l'unité de séparation afin que la teneur en azote (argon) soit compatible avec les spécifications client, cependant, cette solution est très coûteuse, en termes de coûts opératoires et d'investissement.

Le procédé selon l'invention permet de diminuer la teneur en azote et en argon dans le monoxyde de carbone produit en sortie de l'étape de séparation ; le besoin pour une dé-azotation du CO produit sera ainsi moindre, voire l'étape de dé-azotation pourra être supprimée ; il en est de même avec l'argon.

Un autre avantage du procédé selon l'invention est de permettre l'utilisation d'hydrogène produit lors de la séparation comme gaz de régénération pour l'étape de séchage, sans diminution de rendement en hydrogène, et ceci même en l'absence d'étape de purification ultérieure de l'hydrogène (par adsorption par modulation de pression ou PSA notamment).

Un autre avantage de l'invention réside dans une utilisation optimisée des différents compresseurs disponibles sur l'installation de production, permettant ainsi d'en minimiser le nombre, d'améliorer la fiabilité de l'installation, et de minimiser les coûts.

Selon un objet de l'invention, il est donc proposé un procédé de production simultanée d'hydrogène et de monoxyde de carbone à partir d'une charge d'hydrocarbures, ledit procédé comprenant les étapes de :
a) générer un gaz de synthèse, tel qu'un gaz de reformage d'hydrocarbures, contenant principalement de l'hydrogène et du monoxyde de carbone, mais aussi du méthane, du dioxyde de carbone, de l'eau ainsi qu'au moins une impureté sélectionnée parmi l'azote et l'argon ;
b) décarbonater le gaz de synthèse issu de l'étape a) dans une unité de décarbonatation primaire en formant un flux de dioxyde de carbone, et un flux contenant le gaz de synthèse à teneur en dioxyde de carbone réduite ;
c) éliminer l'eau et le dioxyde de carbone restant contenus dans le gaz de synthèse issu de l'étape b) par passage dudit gaz sur lit d'adsorbants,
d) séparer les constituants restants en formant au moins :
   i) un flux gazeux d'hydrogène produit,
   ii) un flux gazeux de monoxyde de carbone produit contenant en outre au moins une impureté sélectionnée parmi l'azote et l'argon,
   iii) un flux de gaz de purge riche en méthane,
   iv) un flux de gaz de flash contenant de l'hydrogène, du monoxyde de carbone et du méthane ;
caractérisé en ce que le procédé comprend en outre les étapes suivantes :
e) régénérer le lit d'adsorbants de l'étape c) par passage d'un gaz de régénération comprenant au moins une proportion non nulle du flux riche en hydrogène i),
f) recycler l'ensemble des flux iii) et iv) issus de l'étape d) pour alimenter l'étape a).

Selon d'autres aspects facultatifs de l'invention, celle-ci peut concerner :
- un procédé dans lequel tout ou partie du flux i) est utilisé comme gaz de régénération, puis la totalité du flux est purifiée dans une unité de purification de type adsorption à modulation de pression (PSA) pour produire un flux d'hydrogène pur pour des besoins client et un gaz résiduaire de PSA (tail gas PSA),
- un procédé dans lequel le gaz résiduaire de PSA est ajouté aux gaz iii) et iv) pour être recyclés pour alimenter l'étape a),
- un procédé dans lequel le flux i) est séparé en au moins deux fractions, la première constituant le produit client, la deuxième étant utilisée pour la mise en oeuvre de l'étape e), caractérisé en outre en ce que ladite deuxième fraction est ensuite recyclée pour alimenter l'étape a),
- un procédé caractérisé en ce qu'on recycle en outre à l'alimentation de l'étape a) tout ou partie du dioxyde de carbone produit à l'étape b),
- un procédé caractérisé en ce qu'on alimente en outre l'étape a) par du dioxyde de carbone importé,
- un procédé pour la production d'un flux de monoxyde de carbone présentant une teneur en azote réduite caractérisé en ce que l'étape d) ne comprend pas d'étape de dé-azotation,
- un procédé pour la production d'un flux de monoxyde de carbone présentant une teneur en azote inférieure à 1,1 % à partir d'une charge d'hydrocarbures constituée d'un gaz naturel présentant une teneur en azote comprise entre 1 et 1,5%,
- un procédé comprenant en outre une ou plusieurs étapes de transformation du monoxyde de carbone en acide acétique ou en polycarbonates.

Selon un autre objet de l'invention, il est prévu une installation pour la production simultanée d'hydrogène et de monoxyde de carbone, la dite installation comprenant :
- une source d'hydrocarbures,
- une unité de génération de gaz de synthèse,
- une unité de décarbonatation primaire du gaz de synthèse,
- une unité de dessiccation et décarbonatation secondaire,
- une unité de séparation en au moins un flux gazeux d'hydrogène produit, un flux gazeux de monoxyde de carbone produit, un flux de gaz de purge et un flux de gaz de flash,
ainsi que :
- des conduits reliant la source d'hydrocarbures avec l'unité de génération de gaz de synthèse, l'unité de génération de gaz de synthèse avec l'unité de décarbonatation primaire, l'unité de décarbonatation primaire avec l'unité de dessiccation et l'unité de dessiccation avec l'unité de séparation,
ainsi que :
- des moyens de soutirage d'hydrogène et de monoxyde de carbone en tant que produits,
- des conduits pour envoyer une proportion non nulle du flux gazeux d'hydrogène produit i) vers l'unité de dessiccation et décarbonatation secondaire, et des conduits pour envoyer les flux iii) de gaz de purge et iv) de gaz de flash vers l'alimentation de l'unité de génération de gaz de synthèse,
l'installation est adaptée ou construite pour mettre en oeuvre un quelconque des procédés tels que définis précédemment.

Dans le cas où l'unité de génération de gaz de synthèse est alimentée à partir d'une source de gaz naturel ou d'hydrocarbures légers et comprend au moins une unité d'hydro-désulfuration, une unité de pré-reformage, une unité de reformage à la vapeur, ladite installation comprend des conduits pour envoyer une proportion non nulle d'au moins un des flux venant de l'unité de séparation à l'exception du flux de monoxyde de carbone, pour alimenter l'unité de désulfuration et/ou l'unité de pré-reformage, et/ou l'unité de reformage.

L'installation peut ainsi comprendre tout ou partie des moyens suivants :
- au moins un moyen de compression pour comprimer au moins une partie du gaz enrichi en dioxyde de carbone provenant de l'unité de décarbonatation et/ou du dioxyde de carbone importé pour alimenter l'unité de génération de gaz de synthèse et au moins un conduit pour envoyer tout ou partie des flux recyclés à l'entrée dudit moyen de compression pour comprimer au moins une partie du gaz enrichi en dioxyde de carbone provenant de l'unité de décarbonatation et/ou du dioxyde de carbone importé afin d'alimenter l'unité de génération de gaz de synthèse,
- au moins un moyen de compression pour comprimer l'hydrogène alimentant l'unité de désulfuration de l'unité de génération de gaz de synthèse et au moins un conduit pour envoyer tout ou partie des flux recyclés à l'entrée dudit moyen de compression pour comprimer l'hydrogène alimentant l'unité d'hydrodésulfuration de l'unité de génération de gaz de synthèse,
- au moins un moyen de compression pour comprimer l'hydrocarbure gazeux alimentant l'unité de génération de gaz de synthèse et au moins un conduit pour envoyer tout ou partie des flux recyclés à l'entrée du moyen de compression pour comprimer l'hydrocarbure gazeux alimentant l'unité de génération de gaz de synthèse.

L'installation peut aussi comprendre au moins un moyen de compression pour comprimer l'hydrogène produit - par l'unité de séparation ou l'unité de purification -, un moyen de soutirage d'une fraction du flux d'hydrogène produit après compression et au moins un conduit pour envoyer ladite fraction à l'unité de génération de gaz de synthèse.

L'invention va maintenant être décrite en se référant aux figures ci-après.

Ces figures illustrent des modes de réalisation du procédé de l'invention.
Les Figures 1 à 4 représentent schématiquement une installation pour la génération et la séparation du gaz de synthèse, avec recyclages de flux gazeux selon l'invention.
La Figure 1 illustre un mode de réalisation de l'invention dans lequel l'hydrogène produit dans la boîte froide est ensuite purifié dans une unité PSA; les flux recyclés sont comprimés via le compresseur de CO₂ avant d'alimenter l'unité de génération de gaz de synthèse.
Les Figures 2 à 4 présentent des variantes de l'invention dans lesquelles l'hydrogène produit par la boîte froide est à une pureté adaptée aux besoins du client ; une fraction non nulle de l'hydrogène produit est prélevée et utilisée comme gaz de régénération avant d'être recyclée avec les gaz de purge et de flash.

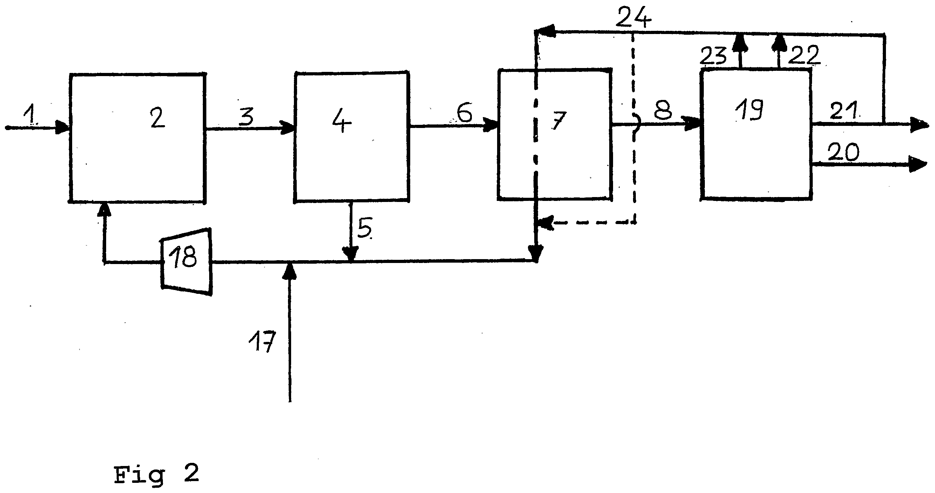

Selon le mode de réalisation de la Figure 2, les gaz sont recyclés via le compresseur de CO₂.

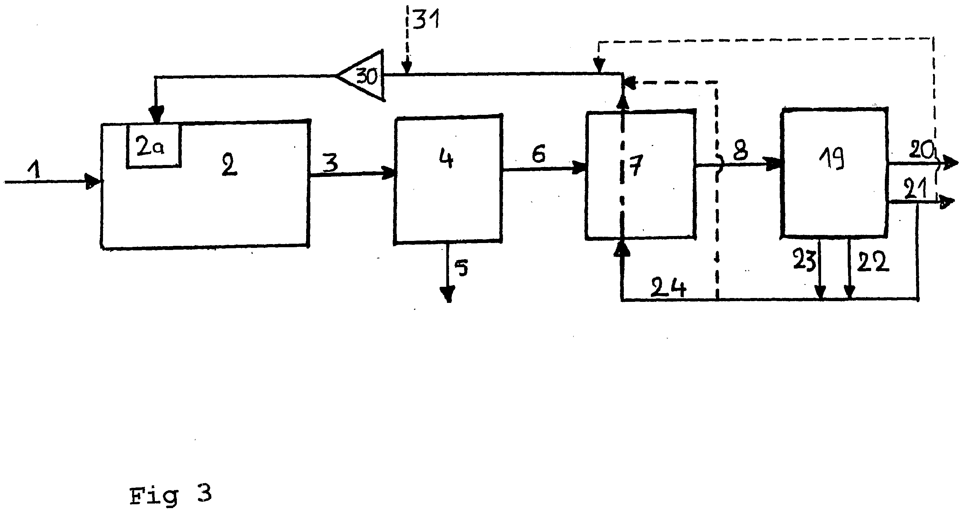

Selon le mode de réalisation de la Figure 3, les gaz sont recyclés à l'unité d'hydrodésulfuration (HDS) via le compresseur d'hydrogène dédié.

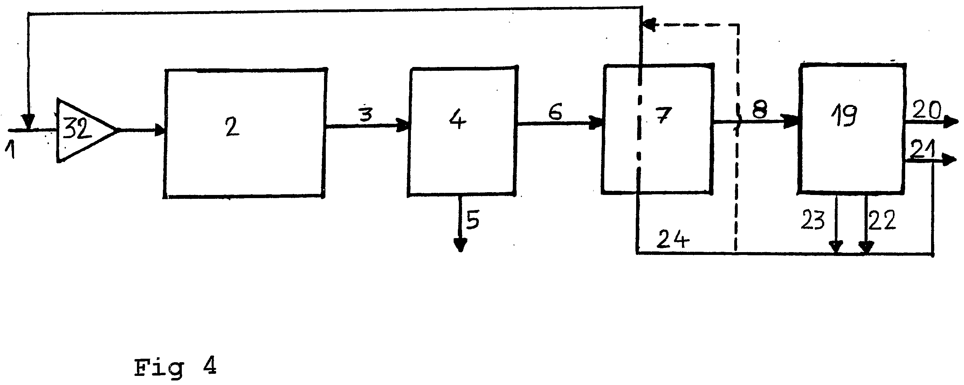

Selon le mode de réalisation de la Figure 4, les gaz sont recyclés au niveau de la charge d'hydrocarbures alimentant l'unité de génération de gaz de synthèse.

Il doit être entendu que l'invention ne se limite pas à ces modes de réalisation. L'homme du métier pourra notamment envisager des variantes dans les techniques de génération, de traitement et de recyclage illustrées dans ces modes de réalisation.

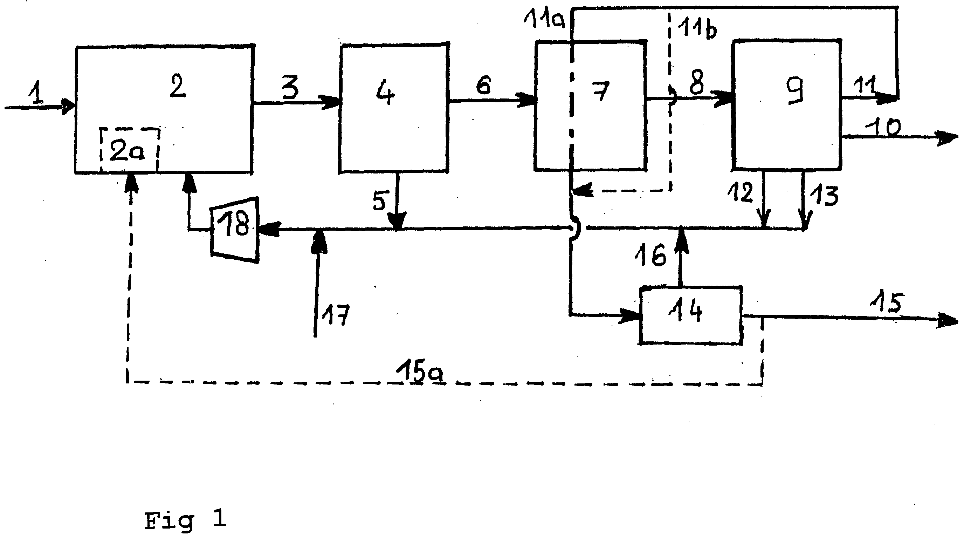

Dans la Figure 1, un flux 1 d'hydrocarbures (gaz naturel par exemple) alimente une unité de génération de gaz de synthèse 2, le flux de gaz de synthèse 3 généré dans l'unité 2 passe dans une unité 4 de lavage aux amines afin d'enlever le dioxyde de carbone qui est récupéré via le flux gazeux 5. Le gaz de synthèse décarbonaté 6 est ensuite débarrassé de son eau et du CO₂ résiduel dans une unité d'épuration 7 pour produire un flux gazeux 8 contenant de l'hydrogène, du monoxyde de carbone, du méthane, ainsi que l'azote et l'argon initialement présents dans le gaz naturel, ou dans tout autre fluide alimentant l'unité 2 et non représenté.

Ce flux gazeux est ensuite séparé dans une unité de séparation cryogénique 9 pour produire un produit gazeux 10 riche en monoxyde de carbone (typiquement 99 %), un gaz riche en hydrogène 11, une purge de méthane 12 et un gaz de flash 13.

Le gaz 11 dont la pureté n'est pas suffisante pour les besoins du client, devra subir une étape de purification; préalablement à cette étape, le gaz 11 est envoyé pour sa partie 11a comme gaz de régénération à l'unité 7 où il sert à régénérer un des lits d'adsorbants et pour sa partie 11 b by-passé ; la partie 11a se charge essentiellement en eau mais aussi en CO₂. Les deux fractions sont ensuite rassemblées, le flux résultant est envoyé dans l'unité PSA 14 (ou unité d'adsorption à modulation de pression) pour fournir un flux d'hydrogène purifié 15 (typiquement 99% ou plus) et un résiduaire de PSA 16 (ou tail gas en langue anglaise).

Un flux 17 de CO₂ est importé sur l'installation, il est comprimé dans le compresseur 18 avant d'alimenter l'unité 2 de génération de gaz de synthèse.

La purge de méthane 12, le gaz de flash 13, le tail gas 16 du PSA et le CO₂ 5 provenant de l'unité de décarbonatation sont recyclés vers l'unité 2 ; ils sont envoyés avec le flux 17 à l'alimentation du compresseur 18 pour y être comprimés avant d'alimenter l'unité 2 de génération de gaz de synthèse.

En variante ou en addition, lorsque la génération du gaz de synthèse fait appel à une étape d'hydrodésulfuration préalable à une étape de reformage (éventuellement de pré-reformage), une fraction (ligne pointillée référencée 15a sur la figure) du flux d'hydrogène 15 peut être envoyée vers l'unité d'hydrodésulfuration (ligne pointillée référencée 2a dans l'unité 2).

Dans la Figure 2, les flux et éléments constitutifs de l'installation ayant les mêmes chiffres de référence que ceux de la Figure 1 correspondent aux flux et éléments constitutifs désignés dans la Figure 1. Ainsi, le flux 1 d'hydrocarbures alimente l'unité de génération de gaz de synthèse 2, le flux de gaz de synthèse 3 généré dans l'unité 2 passe dans l'unité 4 de lavage aux amines afin d'enlever le dioxyde de carbone qui est récupéré via le flux gazeux 5. Le gaz de synthèse décarbonaté 6 est ensuite débarrassé de son eau et du CO₂ résiduel dans l'unité d'épuration 7 pour produire un flux gazeux 8 contenant de l'hydrogène, du monoxyde de carbone, du méthane, ainsi que l'azote et l'argon initialement présents dans les hydrocarbures ou tout autre fluide alimentant l'unité 2 et non représenté.

Le flux gazeux 8 est ensuite séparé dans une unité de séparation cryogénique 19 pour produire un produit gazeux 20 riche en monoxyde de carbone (typiquement 99%), un gaz riche en hydrogène 21, une purge de méthane 22 et un gaz de flash 23.

Le gaz 21 a, dans cet exemple, une pureté en hydrogène suffisante pour les besoins du client sans qu'il soit nécessaire d'ajouter une étape de purification supplémentaire ; une partie de cet hydrogène est prélevée pour former, avec la purge de méthane 22 et le gaz de flash 23, un flux gazeux 24 qui sera envoyé comme gaz de régénération à l'unité 7 (inclus by-pass représenté en pointillés).

Un flux de CO₂ 17 est importé sur l'installation, il est comprimé dans le compresseur 18 avant d'alimenter l'unité de génération de gaz de synthèse 2.

Après la régénération, le gaz 24 et le flux 5 de CO₂ provenant de l'unité de décarbonatation 4 sont rassemblés et recyclés vers l'unité 2 ; ils sont envoyés avec le flux 17 à l'alimentation du compresseur 18 pour être comprimés avant d'alimenter l'unité de génération de gaz de synthèse 2.

Dans la Figure 3, les flux et éléments constitutifs de l'installation ayant les mêmes chiffres de référence que ceux des Figures 1 ou 2 correspondent aux flux et éléments constitutifs désignés dans ces figures.

De même que dans le cas de la Figure 2, le gaz 21 a une pureté en hydrogène suffisante pour être directement vendu au client sans étape de purification ultérieure ; une partie de cet hydrogène est prélevée pour former, avec la purge de méthane 22 et le gaz de flash 23, un flux gazeux 24 qui sera envoyé comme gaz de régénération à l'unité 7 (inclus by-pass représenté en pointillés).

Selon la Figure 3, après la régénération, le gaz 24 est recyclé vers l'unité 2 où, la génération du gaz de synthèse faisant appel à une étape d'hydrodésulfuration préalable, on choisit d'envoyer le gaz 24 ayant servi à la régénération (inclus by-pass) à l'alimentation d'un compresseur d'hydrogène 30 présent pour comprimer l'hydrogène alimentant le module HDS de l'unité 2.

Cet hydrogène peut provenir de différentes sources, ainsi en variante ou en addition, une deuxième fraction (ligne pointillée non référencée sur la figure) du flux d'hydrogène produit 21 peut être envoyée vers l'unité d'hydrodésulfuration, via le compresseur 30 ; selon une autre variante (non représentée) de l'hydrogène peut être prélevé dans le flux 21 après que celui-ci ait été comprimé dans un compresseur dédié à la compression de l'hydrogène produit ; dans ce cas, si la pression d'hydrogène est suffisante, il pourra alimenter l'unité HDS sans compression supplémentaire ; un flux d'hydrogène 31 est éventuellement importé sur l'installation, il est comprimé (selon les besoins) dans le compresseur 30 avant d'alimenter l'unité de génération de gaz de synthèse 2.

Une utilisation ou une adaptation judicieuse des différentes possibilités de compression de l'installation doit ainsi permettre de minimiser les coûts de compression.

Dans la Figure 4, les flux et éléments constitutifs de l'installation ayant les mêmes chiffres de référence que ceux des Figures 1, 2 ou 3 correspondent aux flux et éléments constitutifs désignés dans ces figures.

De même que dans les Figures 2 et 3, le gaz 21 a une pureté en hydrogène suffisante pour être directement vendu au client sans purification ultérieure; une partie de cet hydrogène est prélevée pour former, avec la purge de méthane 22 et le gaz de flash 23, un flux gazeux 24 qui est envoyé comme gaz de régénération à l'unité 7 (inclus by-pass représenté en pointillés).

Selon la Figure 4, après la régénération, le gaz 24 est recyclé vers l'unité 2, en complément de la charge d'hydrocarbures 1, et en amont d'un compresseur de charge existant 32.

En variante, lorsque la charge 1 est disponible à une pression suffisante sans qu'il soit nécessaire d'utiliser un compresseur de charge, il faudra pour utiliser le flux 21 comme charge de complément faire appel à un compresseur dédié, ou prélever l'hydrogène dans le flux 21 après un compresseur produit

Ainsi que l'illustrent les exemples précédents, on peut utiliser les flux produits par l'unité de séparation cryogénique pour alimenter l'étape de génération du gaz de synthèse de différentes manières. On peut les utiliser en tant que charge, en substitution partielle de la charge d'hydrocarbures, en tant qu'hydrogène, en substitution partielle de l'hydrogène de désulfuration, et/ou en tant que CO₂.

Quelle que soit l'utilisation qui en est faite conformément à l'invention, ces flux recyclés contribuent à l'alimentation de l'unité de génération de gaz de synthèse ; puisqu'ils sont exempts d'azote, d'hélium et autres inertes, ils modifient la composition du gaz de synthèse généré en diminuant sa teneur en ces constituants.

Les avantages du procédé selon l'invention sont multiples, on citera ainsi notamment :
- pouvoir minimiser la teneur en inerte (azote ou argon notamment) dans le monoxyde de carbone produit ; ce point est toujours intéressant, mais il le sera tout particulièrement lorsque la teneur en inertes dans le gaz d'alimentation est telle que, sans recyclage des flux gazeux co-produits en même temps que le CO, il faille, pour respecter les spécifications du client, investir une étape supplémentaire de séparation d'un ou de plusieurs inertes du CO,
- augmenter la production de CO, en recyclant l'ensemble des molécules carbonées autres que le CO produit à l'alimentation de l'étape de génération,
- augmenter les rendements de production d'H₂ et de CO,
- déballaster le bilan combustible de l'unité de génération de gaz de synthèse (par accroissement de la part du gaz naturel en tant que combustible à la place des offgas et résiduaires généralement recyclés pour être brûlés comme gaz combustible),
- réduire la puissance calorifique envoyée aux brûleurs,
- diminuer la température de flamme dans les brûleurs,
- pouvoir utiliser l'hydrogène produit lors de la séparation comme gaz de régénération pour l'étape de séchage, sans diminution de rendement en hydrogène, et ceci sans étape de purification ultérieure de l'hydrogène produit ;
- minimiser le dimensionnement des équipements pour la génération du gaz de synthèse,
- ajuster le ratio H₂/CO produit en sortie de réacteur.

D'autres avantages de l'invention résultent de l'utilisation optimisée des différents compresseurs existant sur l'installation, ainsi que du fait que l'on utilisera un compresseur commun pour comprimer plusieurs fluides ; ceci permettra d'améliorer la fiabilité de l'installation tout en minimisant les coûts. Parmi ces avantages, on notera ainsi :
- minimiser le nombre de machines,
- permettre d'utiliser un compresseur centrifuge au lieu d'un ou plusieurs compresseurs alternatifs ou à pistons,
- limiter le nombre de conduites,
- limiter le nombre de points d'entrée de gaz comprimés dans les unités.

## Revendications

1. Procédé de production simultanée d'hydrogène et de monoxyde de carbone à partir d'une charge d'hydrocarbures, ledit procédé comprenant les étapes de :
a) générer un gaz de synthèse, tel qu'un gaz de reformage d'hydrocarbures, contenant principalement de l'hydrogène et du monoxyde de carbone, mais aussi du méthane, du dioxyde de carbone, de l'eau ainsi qu'au moins une impureté sélectionnée parmi l'azote et l'argon ;
b) décarbonater le gaz de synthèse issu de l'étape a) dans une unité de décarbonatation primaire en formant un flux de dioxyde de carbone et un flux contenant le gaz de synthèse à teneur en dioxyde de carbone réduite ;
c) éliminer l'eau et le dioxyde de carbone restant contenus dans le gaz de synthèse issu de l'étape b) par passage dudit gaz sur lit d'adsorbants ;
d) séparer les constituants restants en formant au moins :
i) un flux gazeux d'hydrogène produit,
ii) un flux gazeux de monoxyde de carbone produit contenant en outre au moins une impureté sélectionnée parmi l'azote et l'argon,
iii) un flux de gaz de purge riche en méthane,
iv) un flux de gaz de flash contenant de l'hydrogène, du CO et du méthane,
**caractérisé en ce que** le procédé comprend en outre les étapes suivantes :
e) régénérer le lit d'adsorbants de l'étape c) par passage d'un gaz de régénération comprenant au moins une proportion non nulle du flux riche en hydrogène i) ;
f) recycler les flux iii) et iv) issus de l'étape d) pour alimenter l'étape a).

2. Procédé selon la revendication 1 dans lequel tout ou partie du flux i) est utilisé comme gaz de régénération, puis la totalité du flux est purifiée dans une unité de purification de type PSA pour produire un flux d'hydrogène pur pour des besoins client et un gaz résiduaire de PSA (tail gas PSA).

3. Procédé selon la revendication 2 dans lequel le gaz résiduaire de PSA est ajouté aux gaz iii) et iv) pour être recyclés pour alimenter l'étape a).

4. Procédé selon la revendication 1 dans lequel le flux i) est séparé en au moins deux fractions, la première constituant le produit client, la deuxième étant utilisée pour la mise en oeuvre de l'étape e), **caractérisé en outre en ce que** ladite deuxième fraction est ensuite recyclée pour alimenter l'étape a).

5. Procédé selon l'une des revendications 1 à 4 **caractérisé en ce qu'**on recycle en outre à l'alimentation de l'étape a) tout ou partie du dioxyde de carbone produit à l'étape b).

6. Procédé selon l'une des revendications 1 à 5 **caractérisé en ce qu'**on alimente en outre l'étape a) par du dioxyde de carbone importé.

7. Procédé selon l'une des revendications précédentes pour la production de monoxyde de carbone présentant une teneur en azote réduite **caractérisé en ce que** l'étape d) ne comprend pas d'étape de dé-azotation.

8. Procédé selon la revendication précédente pour la production de monoxyde de carbone présentant une teneur en azote inférieure à 1,1% **caractérisé en ce que** la charge d'hydrocarbures est constituée d'un gaz naturel présentant une teneur en azote comprise entre 1 et 1,5%.

9. Procédé tel que défini à l'une des revendications 1 à 6 ou sa variante telle que définie à la revendication 7 ou 8 comprenant en outre une ou plusieurs étapes de transformation du monoxyde de carbone en acide acétique ou en polycarbonates.

10. Installation pour la production simultanée d'hydrogène et de monoxyde de carbone, ladite installation comprenant :
- une source (1) à d'hydrocarbures,
- une unité de génération (2) de gaz de synthèse,
- une unité (4) de décarbonatation primaire du gaz de synthèse,
- une unité (7) de dessiccation et décarbonatation secondaire,
- une unité (9) de séparation en au moins un flux gazeux d'hydrogène (11, 21) produit, un flux gazeux de monoxyde de carbone (10, 20) produit, un flux de gaz de purge (12, 22), et un flux de gaz de flash (13, 23), ainsi que :
- des conduits reliant la source d'hydrocarbures et l'unité de génération de gaz de synthèse, l'unité de génération de gaz de synthèse avec l'unité de décarbonatation primaire, l'unité de décarbonatation primaire avec l'unité de dessiccation et l'unité de dessiccation avec l'unité de séparation,
ainsi que :
- des moyens de soutirage d'hydrogène et de monoxyde de carbone en tant que produits,
- des conduits pour envoyer une proportion non nulle du flux gazeux d'hydrogène produit vers l'unité de dessiccation et décarbonatation secondaire, et des conduits pour envoyer les flux de gaz de purge et de gaz de flash vers l'alimentation de l'unité de génération de gaz de synthèse,
l'installation étant adaptée ou construite pour mettre en oeuvre le procédé tel que défini à l'une quelconque des revendications 2 à 9.

11. Installation selon la revendication 10 dans laquelle l'unité de génération de gaz de synthèse est alimentée à partir d'une source de gaz naturel ou d'hydrocarbures légers et comprend au moins une unité de désulfuration (2a), une unité de pré-reformage, une unité de reformage à la vapeur, **caractérisée en ce que** ladite installation comprend des conduits pour envoyer une proportion non nulle d'au moins un des flux venant de l'unité de séparation à l'exception du flux de monoxyde de carbone, à l'unité de désulfuration et/ou à l'unité de pré-reformage, et/ou à l'unité de reformage.

12. Installation selon l'une des revendications 10 ou 11 comprenant en outre au moins un moyen de compression (18) pour comprimer au moins une partie du gaz enrichi en dioxyde de carbone provenant de l'unité de décarbonatation et/ou du dioxyde de carbone importé pour alimenter l'unité de génération de gaz de synthèse et au moins un conduit pour envoyer tout ou partie des flux recyclés à l'entrée dudit moyen de compression pour comprimer au moins une partie du gaz enrichi en dioxyde de carbone provenant de l'unité de décarbonatation et/ou du dioxyde de carbone importé afin d'alimenter l'unité de génération de gaz de synthèse.

13. Installation selon l'une des revendications 10 à 12 comprenant en outre au moins un moyen de compression (30) pour comprimer l'hydrogène alimentant l'unité de désulfuration de l'unité de génération de gaz de synthèse et au moins un conduit pour envoyer tout ou partie des flux recyclés à l'entrée dudit moyen de compression pour comprimer l'hydrogène alimentant l'unité d'hydrodésulfuration de l'unité de génération de gaz de synthèse.

14. Installation selon l'une des revendications 10 à 13 comprenant en outre au moins un moyen de compression (32) pour comprimer l'hydrocarbure gazeux alimentant l'unité de génération de gaz de synthèse et au moins un conduit pour envoyer tout ou partie des flux recyclés à l'entrée du moyen de compression pour comprimer l'hydrocarbure gazeux alimentant l'unité de génération de gaz de synthèse.

## Patentansprüche

1. Verfahren zur gleichzeitigen Herstellung von Wasserstoff und Kohlenmonoxid aus einer Kohlenwasserstoffcharge, wobei das Verfahren die folgenden Schritte umfasst:
a) Erzeugen eines Synthesegases wie z. B. eines Kohlenwasserstoff-Reformatgases, das hauptsächlich Wasserstoff und Kohlenmonoxid enthält, aber auch Methan, Kohlendioxid, Wasser sowie mindestens eine Verunreinigung, ausgewählt aus Stickstoff und Argon;
b) Dekarbonieren des Synthesegases, das aus Schritt a) stammt, in einer primären Dekarbonierungseinheit durch die Bildung eines Kohlendioxidstroms und eines Stroms, enthaltend das Synthesegas mit einem reduzierten Kohlendioxidgehalt;
c) Entfernen des Wassers und des restlichen Kohlendioxids, die im Synthesegas enthalten sind, das aus Schritt b) stammt, durch Leiten des Gases über ein Bett von Adsorbentien;
d) Trennen der restlichen Bestandteile durch Bilden von mindestens:
i) einem gasförmigen Strom aus erzeugtem Wasserstoff,
ii) einem gasförmigen Strom aus erzeugtem Kohlenmonoxid, enthaltend außerdem mindestens eine Verunreinigung, ausgewählt aus Stickstoff und Argon,
iii) einen Strom aus Reinigungsgas, der reich an Methan ist,
iv) einen Strom aus Flashgas, enthaltend Wasserstoff, CO und Methan,
**dadurch gekennzeichnet, dass** das Verfahren außerdem die folgenden Schritte umfasst:
e) Regenerieren des Betts von Adsorbentien von Schritt c) durch Leiten eines Regenerationsgases, umfassend mindestens eine Proportion verschieden von null des Stroms, der reich an Wasserstoff ist i);
f) Recyceln der Ströme iii) und iv), die aus Schritt d) stammen, um den Schritt a) zu versorgen.

2. Verfahren nach Anspruch 1, wobei alles oder ein Teil des Stroms i) als Regenerationsgas verwendet wird, dann die Gesamtheit des Stroms in einer Reinigungseinheit vom Typ PSA gereinigt wird, um einen Strom aus reinem Wasserstoff für Kundenbedürfnisse und ein Restgas von PSA (PSA-Rückstandsgas) zu erzeugen.

3. Verfahren nach Anspruch 2, wobei das Restgas von PSA den Gasen iii) und iv) zugegeben wird, um recycelt zu werden, um den Schritt a) zu versorgen.

4. Verfahren nach Anspruch 1, wobei der Strom i) in mindestens zwei Fraktionen getrennt wird, wobei die erste das Kundenprodukt darstellt, wobei die zweite für die Durchführung von Schritt e) verwendet wird, außerdem **dadurch gekennzeichnet, dass** die zweite Fraktion dann recycelt wird, um den Schritt a) zu versorgen.

5. Verfahren nach einem der Ansprüche 1 bis 4, **dadurch gekennzeichnet, dass** außerdem bei der Versorgung von Schritt a) alles oder ein Teil des Kohlendioxids, erzeugt in Schritt b), recycelt wird.

6. Verfahren nach einem der Ansprüche 1 bis 5, **dadurch gekennzeichnet, dass** außerdem Schritt a) durch importiertes Kohlendioxid versorgt wird.

7. Verfahren nach einem der vorhergehenden Ansprüche zur Herstellung von Kohlenmonoxid, das einen reduzierten Stickstoffgehalt aufweist, **dadurch gekennzeichnet, dass** Schritt d) keinen Schritt des Deazotierens umfasst.

8. Verfahren nach dem vorhergehenden Anspruch zur Herstellung von Kohlenmonoxid, das einen Stickstoffgehalt von weniger als 1,1 % aufweist, **dadurch gekennzeichnet, dass** die Kohlenwasserstoffcharge aus einem Erdgas besteht, das einen Stickstoffgehalt zwischen 1 und 1,5 % aufweist,

9. Verfahren, wie in einem der Ansprüche 1 bis 6 oder seiner Variante definiert, wie in Anspruch 7 oder 8 definiert, umfassend außerdem einen oder mehrere Schritte des Umformens des Kohlenmonoxids zu Essigsäure oder zu Polycarbonaten.

10. Anlage zur gleichzeitigen Herstellung von Wasserstoff und Kohlenmonoxid, wobei die Anlage Folgendes umfasst:
- eine Quelle (1) von Kohlenwasserstoffen,
- eine Einheit zur Erzeugung (2) von Synthesegas,
- eine Einheit (4) zur primären Dekarbonierung des Synthesegases,
- eine Einheit (7) zur Trocknung und sekundären Dekarbonierung,
- eine Einheit (9) zur Trennung in mindestens einen gasförmigen Strom aus erzeugtem Wasserstoff (11, 21), einen gasförmigen Strom aus erzeugtem Kohlenmonoxid (10, 20), einen Strom aus Reinigungsgas (12, 22), und einen Strom aus Flashgas (13, 23),
sowie:
- Leitungen, die die Quelle von Kohlenwasserstoffen und die Einheit zur Erzeugung von Synthesegas, die Einheit zur Erzeugung von Synthesegas mit der Einheit zur primären Dekarbonierung, die Einheit zur primären Dekarbonierung mit der Einheit zur Trocknung und die Einheit zur Trocknung mit der Einheit zur Trennung verbinden,
sowie:
- Mittel zur Entnahme von Wasserstoff und Kohlenmonoxid als Produkte,
- Leitungen, um eine Proportion verschieden von null des gasförmigen Stroms aus erzeugtem Wasserstoff zur Einheit zur Trocknung und sekundären Dekarbonierung zu schicken, und Leitungen, um die Ströme von Reinigungsgas und Flashgas zur Versorgung der Einheit zur Erzeugung von Synthesegas zu schicken,
- wobei die Anlage ausgelegt oder konstruiert ist, um das Verfahren, wie in einem der Ansprüche 2 bis 9 definiert, durchzuführen.

11. Anlage nach Anspruch 10, wobei die Einheit zur Erzeugung von Synthesegas aus einer Quelle von Erdgas oder leichten Kohlenwasserstoffen versorgt wird und mindesten eine Einheit zur Desulfurierung (2a), eine Einheit zur Vorreformierung, eine Einheit zur Reformierung mit Dampf umfasst, **dadurch gekennzeichnet, dass** die Anlage Leitungen umfasst, um eine Proportion verschieden von null von mindestens einem der Ströme, die aus der Einheit zur Trennung kommen, mit Ausnahme des Stroms von Kohlenmonoxid, an die Einheit zur Desulfurierung und/oder an die Einheit zur Vorreformierung und/oder an die Einheit zur Reformierung zu schicken.

12. Anlage nach einem der Ansprüche 10 oder 11, umfassend außerdem mindestens ein Kompressionsmittel (18), um mindestens einen Teil des Gases, angereichert mit Kohlendioxid, zu komprimieren, das aus der Einheit zur Dekarbonierung und/oder dem importierten Kohlendioxid stammt, um die Einheit zur Erzeugung von Synthesegas zu versorgen, und mindestens eine Leitung, um alles oder einen Teil der recycelten Ströme an den Eingang des Kompressionsmittels zu schicken, um mindestens einen Teil des Gases, angereichert mit Kohlendioxid, zu komprimieren, das aus der Einheit zur Dekarbonierung und/oder dem importierten Kohlendioxid stammt, um die Einheit zur Erzeugung von Synthesegas zu versorgen.

13. Anlage nach einem der Ansprüche 10 bis 12, umfassend außerdem mindestens ein Kompressionsmittel (30), um den Wasserstoff zu komprimieren, der die Einheit zur Desulfurierung der Einheit zur Erzeugung von Synthesegas versorgt, und mindestens eine Leitung, um alles oder einen Teil der recycelten Ströme an den Eingang des Kompressionsmittels zu schicken, um den Wasserstoff zu komprimieren, der die Einheit zur Hydrodesulfurierung der Einheit zur Erzeugung von Synthesegas versorgt.

14. Anlage nach einem der Ansprüche 10 bis 13, umfassend außerdem mindestens ein Kompressionsmittel (32), um den gasförmigen Kohlenwasserstoff zu komprimieren, der die Einheit zur Erzeugung von Synthesegas versorgt, und mindestens eine Leitung, um alles oder einen Teil der recycelten Ströme an den Eingang des Kompressionsmittels zu schicken, um den gasförmigen Kohlenwasserstoff zu komprimieren, der die Einheit zur Erzeugung von Synthesegas versorgt.

## Claims

1. Method for the simultaneous production of hydrogen and carbon monoxide from a hydrocarbon charge, said method comprising the steps of:
a) generating a synthesis gas, such as a hydrocarbon reforming gas, containing mainly hydrogen and carbon monoxide, but also methane, carbon dioxide and water as well as at least one impurity chosen from nitrogen and argon;
b) decarbonating the synthesis gas issuing from step a) in a primary decarbonation unit, forming a flow of carbon dioxide and a flow containing the synthesis gas with a reduced carbon dioxide content;
c) eliminating the remaining water and carbon dioxide contained in the synthesis gas issuing from step b) by passing said gas over a bed of adsorbents;
d) separating the remaining constituents, forming at least:
i) a gaseous flow of hydrogen produced,
ii) a gaseous flow of carbon monoxide produced, also containing at least one impurity chosen from nitrogen and argon,
iii) a flow of purge gas rich in methane,
iv) a flow of flash gas containing hydrogen, CO and methane,
**characterised in that** the method further comprises the following steps:
e) regenerating the bed of adsorbents of step c) by passing a regeneration gas comprising at least one non-zero proportion of hydrogen-rich flow i);
f) recycling the flows iii) and iv) issuing from step d) in order to supply step a).

2. Method according to claim 1, in which all or part of the flow i) is used as the regeneration gas, and then all the flow is purified in a purification unit of the PSA type in order to produce a flow of pure hydrogen for customer requirements and a residual PSA gas (PSA tail gas).

3. Method according to claim 2, in which the residual PSA gas is added to gas iii) and iv) in order to be recirculated to supply step a).

4. Method according to claim 1, in which flow i) is separated into at least two fractions, the first constituting the customer product, the second being used for implementing step e), further **characterised in that** said second fraction is next recirculated in order to supply step a).

5. Method according to one of claims 1 to 4, **characterised in that** all or some of the carbon dioxide produced at step b) is further recirculated to supply step a).

6. Method according to one of claims 1 to 5, characterise in that step a) is also supplied by imported carbon dioxide.

7. Method according to one of the preceding claims for producing carbon monoxide having a reduced nitrogen content, **characterised in that** step d) does not comprise a denitrogenation step.

8. Method according to the preceding claim, for producing carbon monoxide having a nitrogen content of less than 1.1%, **characterised in that** the hydrocarbon charge consists of natural gas having a nitrogen content of between 1% and 1.5%.

9. Method as defined in one of claims 1 to 6 or its variant as defined in claim 7 or 8, further comprising one or more steps of transforming carbon monoxide into acetic acid or polycarbonates.

10. Installation for the simultaneous production of hydrogen and carbon monoxide, said installation comprising:
- a source (1) of hydrocarbons,
- a unit (2) for generating synthesis gas,
- a unit (4) for primary decarbonation of the synthesis gas,
- a desiccation and secondary decarbonation unit (7),
- a unit (9) for separating a gaseous flow of carbon monoxide (10, 20) produced, a flow of purge gas (12, 22) and a flow of flash gas (13, 23) into at least one gaseous flow of hydrogen (11, 21) produced,
as well as:
- pipes connecting the hydrocarbon source and the synthesis gas generator unit, the synthesis gas generator unit with the primary decarbonation unit, the primary decarbonation unit with the desiccation unit and the desiccation unit with the separation unit,
as well as:
- means for drawing off hydrogen and carbon monoxide as products,
- pipes for sending a non-zero proportion of the gaseous flow of hydrogen produced to the desiccation and secondary decarbonation unit, and pipes for sending the flows of purge gas and flash gas to the supply of the synthesis gas generation unit,
the installation being adapted or constructed to implement the method as defined in any of claims 2 to 9.

11. Installation according to claim 10, in which the synthesis gas generation unit is supplied from a source of natural gas or light hydrocarbons and comprises at least one desulphurisation unit (2a), a pre-reforming unit and a steam reforming unit, **characterised in that** said installation comprises pipes for sending a non-zero proportion of at least one of the flows coming from the separation unit with the exception of the flow of carbon monoxide, to the desulphurisation unit and/or to the pre-reforming unit, and/or to the reforming unit.

12. Installation according to one of claims 10 or 11, further comprising at least one compression means (18) for compressing at least some of the gas enriched with carbon dioxide coming from the decarbonation unit and/or carbon dioxide imported to supply the synthesis gas generation unit and at least one pipe for sending all or part of the recirculated flows to the inlet of said compression means in order to compress at least some of the gas enriched with carbon dioxide coming from the decarbonation unit and/or of the imported carbon dioxide in order to supply the synthesis gas generation unit.

13. Installation according to one of claims 10 to 12, further comprising at least one compression means (30) for compressing the hydrogen supplying the desulphurisation unit of the synthesis gas generation unit and at least one pipe for sending all or part of the recirculated flows to the inlet of said compression means in order to compress the hydrogen supplying the hydrodesulphurisation unit of the synthesis gas generation unit.

14. Installation according to one of claims 10 to 13, further comprising at least one compression means (32) for compressing the gaseous hydrocarbon supplying the synthesis gas generation unit and at least one pipe for sending all or part of the recirculated flows to the inlet of the compression means in order to compress the gaseous hydrocarbon supplying the synthesis gas generation unit.
